# EUROPÄISCHE PATENTSCHRIFT

(11) **EP 3 368 423 B1**
(45) Veröffentlichungstag und Bekanntmachung des Hinweises auf die Patenterteilung: **20.11.2019**
(21) Anmeldenummer: 16750707.8
(22) Anmeldetag: 01.08.2016
(51) Int. Cl.: B32B 11/00, B32B 27/00, B32B 27/06, B65B 63/08, B32B 11/04, B32B 27/30, B32B 27/32, B65B 29/00, B65B 63/04

(54) **VERFAHREN UND VORRICHTUNG ZUM ABPACKEN VON WEICHBITUMEN**
METHOD AND DEVICE FOR PACKAGING SOFT BITUMEN
PROCÉDÉ ET DISPOSITIF DE CONDITIONNEMENT DE BITUME MOU

(30) Priorität: 30.10.2015 DE 102015221343
(43) Veröffentlichungstag der Anmeldung: 05.09.2018
(73) Patentinhaber: IPCO Germany GmbH, 70736 Fellbach (DE)
(72) Erfinder: STRAUSS, Rolf, 71384 Weinstadt (DE); FISCHER, Bernd, 71711 Murr (DE)
(74) Vertreter: Patentanwälte Ruff, Wilhelm, Beier, Dauster & Partner mbB
(86) Internationale Anmeldenummer: PCT/EP2016/068352
(87) Internationale Veröffentlichungsnummer: WO 2017/071848

(56) Entgegenhaltungen:
- DE-A1- 3 638 832
- DE-A1- 19 632 787
- GB-A- 1 137 649
- US-A- 4 145 170

## Beschreibung

Die Erfindung betrifft ein Verfahren zum Abpacken von Weichbitumenbahnen mit Penetrationswerten nach DIN EN 1426 zwischen 30 dmm (Dezimillimeter) und 100 dmm sowie einem Erweichungspunkt nach der Ring- und Kugelmethode von weniger als 80 °C. Die Erfindung betrifft auch eine Vorrichtung zum Durchführen des erfindungsgemäßen Verfahrens.

Für die Zwecke dieser Erfindung wird mit dem Begriff "Bitumen" Teerpech, Bitumen mit Füllstoffen sowie reines Bitumen bezeichnet. Weichbitumen, das einen sehr niedrigen Erweichungspunkt im Ring- und Kugeltest (RuK) nach DIN EN 1427 und hohe Penetrationswerte bei der Nadelpenetration nach DIN EN 1426 aufweist, wird bisher im flüssigen Zustand in Fässer oder temperaturstabile Säcke eingefüllt. Sowohl bei Fässern als auch bei temperaturstabilen Säcken ist problematisch, dass diese nicht aufschmelzen und dass Bitumen somit vor der Weiterverarbeitung aus dem Fass bzw. dem Sack entfernt werden muss. Bei Säcken müssen diese aufgeschnitten und in Handarbeit entfernt werden. Darüber hinaus ist es bekannt, aus Weichbitumen Platten zu formen und dann jeweils mehrere Platten in einem Sack einzuschrumpfen. Ein solcher Sack kann aufschmelzbar sein. Sowohl bei dem flüssigen Einfüllen von Bitumen in Fässer oder Säcke sowie auch beim Herstellen von Bitumenplatten ist problematisch, dass eine exakte Einhaltung einer vorgegebenen Füllmenge oder eines vorgegebenen Füllgewichts kaum zu realisieren ist. Gerade bei Weichbitumen ist die Handhabung der Weichbitumenplatten äußerst problematisch, da bereits bei Raumtemperatur das Weichbitumen äußerst klebrig und nur noch begrenzt formstabil ist.

Aus der deutschen Offenlegungsschrift DE 10 02013 226 373 A1 ist ein Verfahren und eine Vorrichtung zum Herstellen von Bitumenblöcken aus Weichbitumen bekannt. Hierbei werden mittels eines Tropfenformers Bitumentropfen aus geschmolzenem Bitumen hergestellt. Die Bitumentropfen werden dann auf einem Bandkühler mit einem umlaufenden Band zum Abkühlen und Verfestigen der Bitumentropfen zu Pastillen abgelegt. Die verfestigten Bitumenpastillen werden dann mittels einer Abfülleinrichtung in Säcke eingefüllt. Da die Bitumentropfen aus Weichbitumen bestehen, verbinden sie sich innerhalb der mit Pastillen gefüllten Säcke wenigstens teilweise wieder zu einer kompakten Bitumenmasse. Die deutsche Offenlegungsschrift DE 36 38 832 A1 zeigt ein Verfahren zum Einpacken von schmelzbaren Bitumina in eine polymere Folie und eine Anlage zur Realisierung dieses Verfahrens. Die polymere Folie wird an einem Förderer angebrachten Zellen zugeführt und flüssiges Bitumen wird auf die Folie aufgebracht. Nachdem das Bitumen vollständig ausgekühlt ist, werden jeweils zwei an den Zellen entstehende Bitumenplatten zu einem Bitumenblock zusammengefügt.

Mit der Erfindung soll ein Verfahren zum Abpacken von Weichbitumen verbessert werden.

Erfindungsgemäß ist hierzu ein Verfahren mit den Merkmalen von Anspruch 1 vorgesehen. Zweckmäßige Weiterbildungen der Erfindung sind in den Unteransprüchen angegeben.

Die Erfindung betrifft ein Verfahren zum Abpacken von Weichbitumen mit Penetrationswerten nach DIN EN 1426 zwischen 30 dmm und 100 dmm sowie einem Erweichungspunkt nach der Ring- und Kugelmethode von weniger als 80 °C. Weichbitumen, das diese Eigenschaften aufweist, wird beispielsweise im Straßenbau eingesetzt. Übliche Bezeichnungen sind Bitumen 35/70, Bitumen 40/60 oder Bitumen 70/100, wobei die Werte vor und hinter dem Schrägstrich jeweils die Penetrationswerte nach DIN EN 1426 in dmm angeben. Erfindungsgemäß ist vorgesehen, eine Kunststofffolie flächig auf ein um zwei Trommeln umlaufendes gekühltes Band eines Bandkühlers aufzulegen, geschmolzenes Weichbitumen auf die Kunststofffolie in Form mindestens einer dünnen Schicht aufzubringen, die Weichbitumenschicht auf dem Bandkühler zu verfestigen, die Weichbitumenschicht zusammen mit der Kunststofffolie in Form einer Weichbitumenbahn vom Bandkühler abzunehmen und die Weichbitumenbahn dann abzupacken.

Das Vorsehen einer Kunststofffolie und das Auftragen des Weichbitumens als Schicht auf die Kunststofffolie macht die Weichbitumenschicht in überraschend einfacher Weise handhabbar. Speziell ist kein Festkleben der Weichbitumenschicht mehr auf dem Band des Bandkühlers zu befürchten. Der Bandkühler ist beispielsweise als Stahlbandkühler mit einem umlaufenden Stahlband ausgebildet. Durch Vorsehen der Kunststofffolie kann die Weichbitumenschicht auch bei Raumtemperatur, bei der sie bereits klebrig ist, in vergleichsweise einfacher Weise weiterverarbeitet und vor allem abgepackt werden. Die Kunststofffolie ist dabei vorteilhafterweise aufschmelzbar, so dass bei der Verwendung des Weichbitumens die Kunststofffolie nicht zunächst entfernt werden muss. Die Erfindung stellt somit ein äußerst vorteilhaftes Verfahren zum Abpacken von Weichbitumen in handhabbaren Mengen zur Verfügung. Überraschenderweise bringt das zunächst aufwändig erscheinende Herstellen einer Weichbitumenbahn auf einer Kunststofffolie sehr große Vorteile beim Abpacken der Weichbitumenbahn.

In Weiterbildung der Erfindung ist vorgesehen, dass die Kunststofffolie einen niedrigeren Schmelzpunkt als das Weichbitumen aufweist.

Überraschenderweise ist es durch flächiges Auflegen der Kunststofffolie auf das gekühlte Band des Bandkühlers möglich, geschmolzenes Weichbitumen auf die Kunststofffolie aufzutragen, ohne dass die Kunststofffolie selbst dabei aufschmilzt. Denn das flüssige, auf die Kunststofffolie gelangende Weichbitumen wird durch die niedrige Temperatur der auf dem Band des Bandkühlers aufliegenden Kunststofffolie sofort abgekühlt und erstarrt wenigstens in dem Bereich, in dem es in Kontakt mit der Kunststofffolie kommt. Das Vorsehen einer solchen Kunststofffolie ermöglicht dadurch eine stark vereinfachte Handhabung des Weichbitumens beim Abnehmen vom Bandkühler sowie beim nachfolgenden Verpacken und gleichzeitig kann die Kunststofffolie gemeinsam mit dem Weichbitumen vor einer Verarbeitung aufgeschmolzen werden.

Vorteilhafterweise wird eine Kunststofffolie aus Polyethylen mit niedriger Dichte, sogenanntes LDPE, verwendet.

Alternativ kann eine Kunststofffolie aus Ethylenvinylacetat, sogenanntes EVA, verwendet werden.

In Weiterbildung der Erfindung beträgt eine Dicke der verfestigten Weichbitumenschicht zwischen 2mm und 15mm, insbesondere zwischen 3mm und 8mm.

Eine Dicke der Weichbitumenschicht in diesem Bereich hat sich als sehr vorteilhaft herausgestellt, da sich Weichbitumenschichten mit einer solchen Dicke noch vergleichsweise leicht abpacken, insbesondere aufwickeln lassen. Bei dünneren Schichten als 2mm kann ggf. der Folienanteil zu hoch sein. Bei Schichten, die dicker sind als 15mm, kühlt das Weichbitumen ggf. nicht schnell genug ab und verfestigt damit nicht schnell genug, so dass das gekühlte Band des Bandkühlers stark verlängert werden muss.

In Weiterbildung der Erfindung ist das Auflegen der Kunststofffolie am stromaufwärts gelegenen Ende eines Obertrums des Bandes und das Abnehmen der Weichbitumenschicht zusammen mit der Kunststofffolie am stromabwärts gelegenen Ende des Obertrums des Bandes vorgesehen.

Auf diese Weise stehen der gesamte Transportweg und die gesamte Transportzeit auf dem Obertrum des Bandes, beispielsweise eines Stahlbandes, zum Verfestigen der aufgetragenen Weichbitumenschicht auf der Kunststofffolie zur Verfügung. Darüber hinaus wird ein kontinuierlicher Prozess bereitgestellt, der die Herstellung von Weichbitumenbahnen auch in sehr großen Mengen ermöglicht. Das geschmolzene Weichbitumen wird im Bereich des stromaufwärts gelegenen Endes des Obertrums des Stahlbands aufgebracht und das Weichbitumen verfestigt dann während der Bewegung der Weichbitumenschicht vom stromaufwärts gelegenen Ende des Obertrums zum stromabwärts gelegenen Ende. Das Weichbitumen wird beispielsweise mittels mehrerer, nebeneinander angeordneter Nadelventile mit zugeordneten Düsen aufgebracht. Aus jedem Nadelventil beziehungsweise jeder Düse ergießt sich ein Streifen geschmolzenen Weichbitumens auf die Kunststofffolie. Diese Streifen verlaufen dann unmittelbar nach dem Auftragen zu einer durchgehenden Schicht Weichbitumen. Im Rahmen der Erfindung kann das Weichbitumen auch in anderer Weise auf die Kunststofffolie aufgebracht werden. Es ist beispielsweise auch möglich, zunächst eine vergleichsweise dünne Schicht Weichbitumen auf die Kunststofffolie aufzutragen, die dann unmittelbar nach dem Auftreffen auf die Kunststofffolie erstarrt. Stromabwärts dieser ersten Aufbringstelle kann dann eine weitere Weichbitumenschicht auf die dann bereits verfestigte, erste Weichbitumenschicht aufgetragen werden, um die Schichtdicke zu erhöhen.

In Weiterbildung der Erfindung ist das Aufbringen des Weichbitumens in Form eines Streifens vorgesehen, der schmäler ist als die Kunststofffolie, so dass neben einem rechten und linken Rand des Weichbitumenstreifens jeweils ein Streifen nicht bedeckter Kunststofffolie liegt.

Diese Streifen nicht bedeckter Kunststofffolie neben dem rechten und linken Rand des Weichbitumenstreifens erleichtern die Handhabung und auch die Verpackung der Weichbitumenbahn erheblich, da auf diesen nicht bedeckten Streifen der Kunststofffolie kein klebriges Weichbitumen angeordnet ist. Beispielsweise können die Streifen auf die Oberseite der Bitumenbahn umgeschlagen werden oder die Weichbitumenbahn kann aufgerollt oder in Schlaufen aufeinandergelegt werden und die überstehenden Streifen nicht bedeckter Kunststofffolie dienen dann zum Herstellen einer Verpackung für die Weichbitumenbahn.

In Weiterbildung der Erfindung ist das Aufbringen des Weichbitumens in Form mehrerer, in Längsrichtung der Kunststofffolie gesehen hintereinander liegender Streifen mit jeweils definierter Länge vorgesehen, so dass zwischen dem Ende eines ersten Streifens und dem Beginn eines zweiten Streifens ein Zwischenbereich mit unbedeckter Kunststofffolie angeordnet ist.

Auf diese Weise steht vor dem Beginn und nach dem Ende eines Weichbitumenstreifens jeweils ein Zwischenbereich mit unbedeckter Kunststofffolie zur Verfügung, der zur Handhabung oder zur Verpackung des Weichbitumenstreifens verwendet werden kann.

In Weiterbildung der Erfindung ist das Schneiden der Kunststofffolie im Zwischenbereich zwischen zwei Streifen aus Weichbitumen quer zur Längsrichtung der Kunststofffolie vorgesehen.

Auf diese Weise können die einzelnen Streifen aus Weichbitumen voneinander getrennt werden und mittels der vorne, hinten sowie gegebenenfalls an den Seiten überstehenden Bereiche nicht bedeckter Kunststofffolie in einfacher Weise gehandhabt werden.

In Weiterbildung der Erfindung ist das Umschlagen eines in Längsrichtung vorne liegenden Teils des Zwischenbereichs der Kunststofffolie auf die Oberseite des Weichbitumenstreifens vorgesehen.

Auf diese Weise kann beispielsweise das vordere Ende des Weichbitumenstreifens problemlos ergriffen werden, da ein Greifer lediglich in Kontakt mit der Kunststofffolie auf der Unterseite sowie dem umgeschlagenen Teil des Zwischenbereichs auf der Oberseite des Weichbitumenstreifens in Kontakt kommt.

In Weiterbildung der Erfindung ist das Aufwickeln des Streifens aus Weichbitumen zusammen mit der Kunststofffolie vorgesehen.

Auf diese Weise können kompakte Rollen aus Weichbitumen hergestellt werden, die aufgrund des Aufrollens keine oder sehr geringe Lufteinschlüsse aufweisen. Das Packvolumen ist dadurch gegenüber einem massiven Bitumenblock nur geringfügig erhöht. Wenn vor dem Aufrollen des Weichbitumenstreifens die Kunststofffolie am vorderen Ende des Streifens auf die Oberseite des Weichbitumenstreifens umgeschlagen wird, kann das vordere Ende des Weichbitumenstreifens ergriffen und problemlos aufgerollt werden.

In Weiterbildung der Erfindung ist das Verschweißen oder Verkleben eines Teils des Zwischenbereichs mit einem nach dem Aufwickeln zugänglichen Abschnitt der Unterseite der Kunststofffolie vorgesehen.

Werden Weichbitumenstreifen mit definierter Länge hergestellt, so steht am vorderen Ende und am hinteren Ende des Weichbitumenstreifens nach dem Durchschneiden der Kunststofffolie in Querrichtung jeweils ein Teil des Zwischenbereichs mit nicht bedeckter Kunststofffolie zur Verfügung. Der Teil des Zwischenbereichs am vorderen Ende wird auf die Oberseite des Weichbitumenstreifens umgeschlagen, um das Aufrollen, beginnend mit dem vorderen Ende des Weichbitumenstreifens zu ermöglichen. Nach dem Aufrollen des Weichbitumenstreifens wird der am Ende des Weichbitumenstreifens und damit dann außen auf der Rolle aufliegende Teil des Zwischenbereichs vom hinteren Ende des Weichbitumenstreifens auf die dann abschnittsweise zugängliche Unterseite der Kunststofffolie der letzten Windung der Rolle aufgelegt und die beiden Abschnitte der Kunststofffolie werden beispielsweise miteinander verschweißt oder verklebt. Auf diese Weise kann die Rolle nicht nur fixiert, sondern gleichzeitig auch verpackt werden. Zur vollständigen Verpackung können dann noch die über den rechten und linken Rand des Weichbitumenstreifens überstehenden Bereiche nicht bedeckter Kunststofffolie miteinander verschweißt werden, um eine dichte Verpackung der Weichbitumenrolle zu ermöglichen.

In Weiterbildung der Erfindung ist das schlaufenförmige Einlegen des Weichbitumenstreifens mit der Kunststofffolie in einen Transportsack vorgesehen.

Beispielsweise kann die hergestellte Weichbitumenbahn in einen sogenannten Bigbag eingelegt werden, also einen Transportsack mit einem Volumen von etwa 1 Kubikmeter, der mit Transportschlaufen für seine Handhabung versehen ist. Das schlaufenförmige Einlegen der Weichbitumenbahn kann dabei problemlos erfolgen, da die Mittel zum schlaufenförmigen Einlegen, beispielsweise bewegbare Transportwalzen, lediglich mit der Kunststofffolie auf der Unterseite des Weichbitumenstreifens in Kontakt kommen müssen. Der Transportsack selbst kann dabei aus aufschmelzbarem Material bestehen. Da die Weichbitumenbahn im verfestigten, aber noch plastisch verformbaren Zustand eingelegt wird, muss der Transportsack selbst nicht temperaturstabil sein.

Beispielsweise ist das Verwenden eines Transportsacks vorgesehen, der einen niedrigeren Schmelzpunkt als das Weichbitumen aufweist.

Auf diese Weise kann der vollständige Transportsack gemeinsam mit dem Weichbitumen aufgeschmolzen und dann weiterverarbeitet werden.

Gemäß der Erfindung ist auch eine Vorrichtung zum Durchführen des erfindungsgemäßen Verfahrens vorgesehen. Eine solche Vorrichtung weist einen Bandkühler mit einem umlaufenden, gekühlten Band auf, insbesondere einen Stahlbandkühler mit einem umlaufenden, gekühlten Stahlband. Das Obertrum des umlaufenden Bands wird dabei von seiner Unterseite her gekühlt, beispielsweise durch Sprühdüsen, die Wasser auf die Unterseite des Obertrums aufsprühen. Die Vorrichtung weist darüber hinaus eine Abrollvorrichtung für eine Kunststofffolie auf, die am stromaufwärts gelegenen Ende des Obertrums des Bands auf dieses aufgelegt und am stromabwärts gelegenen Ende des Obertrums dann zusammen mit dem aufgebrachten Weichbitumen wieder abgenommen werden kann. Das geschmolzene Weichbitumen wird mit mindestens einer Düse oder sonstigen Auslassvorrichtung auf die Kunststofffolie im Bereich des Beginns des Obertrums des Bands aufgebracht. Beispielsweise können hier mehrere nebeneinander angeordnete Nadelventile vorgesehen sein. Die erfindungsgemäße Vorrichtung kann darüber hinaus eine Schneidevorrichtung für die Kunststofffolie aufweisen. Beispielsweise wird das Weichbitumen in Form mehrerer, hintereinander angeordneter Streifen mit definierter Länge aufgebracht und mittels der Schneidevorrichtung kann dann die nicht bedeckte Kunststofffolie im Zwischenbereich zwischen zwei Weichbitumenstreifen quer zur Längsrichtung der Kunststofffolie geschnitten werden. Die Länge der Streifen ist dabei durch eine gewünschte Masse der aufgerollten oder in einen Transportsack eingelegten Weichbitumenbahn bestimmt. Beispielsweise werden für die manuelle Weiterverarbeitung Massen zwischen 20 kg und 40 kg, bei maschineller Weiterverarbeitung bis zu 1 to (1.000kg) abgepackt. Die erfindungsgemäße Vorrichtung weist darüber hinaus Mittel auf, um die hergestellte Weichbitumenbahn entweder zu einer Rolle aufzuwickeln oder schlaufenförmig in einen Transportsack einzulegen. Wenn die Weichbitumenbahn zu einer Rolle aufgewickelt wird, können Mittel vorgesehen sein, um den Zwischenbereich mit nicht bedeckter Kunststofffolie am vorderen Ende eines Weichbitumenstreifens auf die Oberseite des Weichbitumenstreifens umzuschlagen. Bei Beginn des Aufwickelns kann das vordere Ende des Weichbitumenstreifens dadurch problemlos ergriffen und aufgerollt werden. Weiterhin können Mittel zum Verschweißen oder Verkleben der Kunststofffolie vorgesehen sein. Nach dem vollständigen Aufwickeln eines Weichbitumenstreifens kann dann der Zwischenbereich, der auf das hintere Ende des Weichbitumenstreifens folgt, mit der auf der Außenseite der Rolle aufliegenden Kunststofffolie verschweißt oder verklebt werden. In ähnlicher Weise können die Mittel zum Verschweißen dann auch dazu dienen, rechts und links neben dem Weichbitumenstreifen überstehende Bereiche nicht bedeckter Kunststofffolie an der Rolle miteinander zu verschweißen, um dadurch eine dichte Verpackung herzustellen. Alternativ kann die Weichbitumenbahn zusammen mit der Kunststofffolie schlaufenförmig in einen Transportsack eingelegt werden. Hierzu dienen dann beispielsweise in und entgegen der Längsrichtung der Weichbitumenbahn bewegliche Transportrollen und Haltevorrichtungen für den Transportsack. Auch hier sind wieder Schneidvorrichtungen vorgesehen, um die Kunststofffolie in einem nicht bedeckten Bereich alleine oder die Weichbitumenbahn zusammen mit der Kunststofffolie quer zu ihrer Längsrichtung durchzuschneiden, wenn der Transportsack vollständig gefüllt ist.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, dargestellten Ausführungsformen lassen sich dabei ein beliebiger Weise miteinander kombinieren, ohne den Rahmen der Erfindung zu überschreiten. In den Zeichnungen zeigen:
- Fig. 1: eine schematische Darstellung einer Vorrichtung zur Durchführung des erfindungsgemäßen Verfahrens,
- Fig. 2: eine schematische Darstellung einer Weichbitumenbahn von der Seite zur Verdeutlichung des Umschlagens eines vorderen Zwischenbereichs der Kunststofffolie auf die Oberseite des Weichbitumenstreifens,
- Fig. 3: eine schematische Darstellung einer Weichbitumenbahn von vorne,
- Fig. 4: eine schematische Darstellung des Aufwickelns der hergestellten Weichbitumenbahn in Form einer Rolle und
- Fig. 5: eine schematische Darstellung des schlaufenförmigen Einlegens der hergestellten Weichbitumenbahn in einen Transportsack.

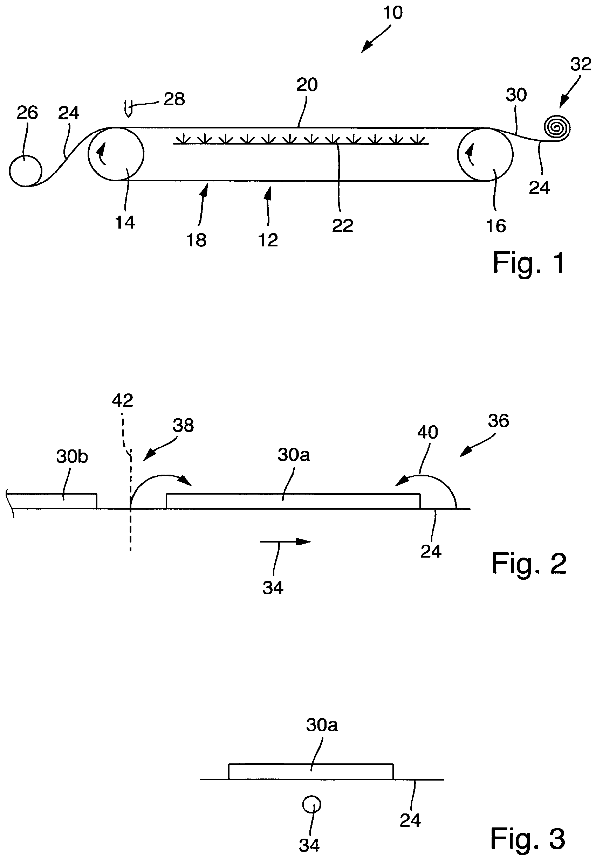

Die Darstellung der Fig. 1 zeigt eine erfindungsgemäße Vorrichtung 10 zum Herstellen von Weichbitumenbahnen nach dem erfindungsgemäßen Verfahren. Die Vorrichtung 10 weist einen Stahlbandkühler 12 mit einem um zwei Trommeln 14, 16 umlaufenden Stahlband 18 auf. Im Rahmen der Erfindung kann das Stahlband 18 beispielsweise auch als Kunststoffband ausgebildet sein. Im Bereich eines Obertrums 20 des Stahlbands 18 wird die Unterseite des Stahlbands 18 mittels mehrerer Sprühdüsen 22 gekühlt. Die Sprühdüsen 22 sprühen Kühlwasser gegen die Unterseite des Stahlbands 18 im Bereich des Obertrums 20. Das von der Unterseite dann wieder abtropfende Kühlwasser wird in nicht dargestellter Weise aufgefangen, gegebenenfalls gekühlt und in einem Kreislauf mittels der Düsen 22 wieder gegen die Unterseite des Obertrums 20 des Stahlbands 18 gesprüht. In der Darstellung der Fig. 1 bewegt sich das Stahlband 18 im Bereich des Obertrums 20 von links nach rechts. Durch gekrümmte Pfeile in den Trommeln 14, 16 ist deren Drehrichtung angedeutet.

Im Bereich der Trommel 14, also am stromaufwärts gelegenen Ende des Obertrums 20, wird eine Kunststofffolie 24 auf die Oberseite des Stahlbands 18 aufgelegt. Die Kunststofffolie 24 wird von einer Abwickelvorrichtung 26 für die Kunststofffolie 24 zugeführt. Beispielsweise wird die Kunststofffolie 24 in Form einer großen Rolle angeliefert, in die Abwickelvorrichtung 26 eingelegt und dann in geeigneter Weise während des Umlaufs des Stahlbands 18 auf dieses aufgelegt. Die Kunststofffolie besteht bei der dargestellten Ausführungsform aus Polyethylen mit niedriger Dichte (LDPE) alternativ aus Ethylenvinylacetat (EVA). Der Schmelzpunkt der Kunststofffolie 24 kann dabei noch unter dem Schmelzpunkt des aufgetragenen Weichbitumens liegen.

Unmittelbar stromabwärts der Trommel 14 sind mehrere Düsen 28 mit nicht dargestellten Nadelventilen vorgesehen, um geschmolzenes Weichbitumen in Form mehrerer, nebeneinanderliegender schmaler Streifen auf die Kunststofffolie 24 aufzutragen. Unmittelbar nach dem Auftragen des Weichbitumens verläuft dieses zu einer durchgehenden, dünnen Schicht auf der Kunststofffolie 24. Die Mittel zum Schmelzen und Zuführen des Weichbitumens zu den Düsen 28 sind der Übersichtlichkeit halber nicht dargestellt.

Selbst wenn die Kunststofffolie 24 einen niedrigeren Schmelzpunkt als das flüssig aufgebrachte Weichbitumen hat, so führt dies nicht zu einem Aufschmelzen der Kunststofffolie 24, da diese ja flächig auf dem gekühlten Stahlband 18 aufliegt und somit aufgrund ihrer geringen Dicke die niedrige Temperatur des gekühlten Stahlbands 18 aufweist. Beispielsweise weist die Kunststofffolie eine Dicke zwischen 10 µm und 100 µm auf, wobei die Dicke der Folie vom Schmelzpunkt des Folienmaterials, von der Aufgabetemperatur des geschmolzenen Weichbitumens, der Temperatur des Kühlwassers unter dem Stahlband 18 und der gewünschten Schichtdicke der herzustellenden Weichbitumenschicht abhängt. Darüber hinaus ist auch noch zu beachten, dass durch die Kunststofffolie 24 nicht mehr als 2% der Bitumenmasse an Kunststoff zugesetzt werden. Ein solcher Wert wird von den meisten Bitumenverarbeitern akzeptiert, da sich durch eine Zugabe von nicht mehr als 2% der Bitumenmasse an Kunststoff die Eigenschaften des Bitumens nicht verändern.

Unmittelbar nach dem Auftreffen des geschmolzenen Weichbitumens aus den Düsen 28 auf die Kunststofffolie 24 kühlt das Weichbitumen im Bereich der Kontaktfläche mit der Kunststofffolie 24 ab und verfestigt sich in diesem Bereich. Durch diesen Effekt kann verhindert werden, dass die Kunststofffolie 24 nach dem Kontakt mit dem geschmolzenen Weichbitumen selbst aufschmilzt, selbst wenn die Kunststofffolie 24 einen niedrigeren Schmelzpunkt als das aufgebrachte Weichbitumen hat. Das Weichbitumen verläuft dann beispielsweise noch zu einer durchgehenden, flächigen Schicht und wird zusammen mit der Kunststofffolie 24, die ja zusammen mit dem umlaufenden Stahlband 18 bewegt wird, in Richtung der in Fig. 1 rechts angeordneten Trommel 16 weiter. Im Laufe dieses Transportwegs erstarrt das flüssige Weichbitumen vollständig und bildet eine kompakte Schicht. Eine Dicke dieser verfestigten, kompakten Schicht liegt dabei vorteilhafterweise zwischen 2mm und 15mm. Als besonders vorteilhaft haben sich Schichtdicken zwischen 3mm und 8mm ergeben. Aufgrund der Eigenschaften von reine Weichbitumen ist diese dünne Schicht immer noch äußerst klebrig und nur in sehr beschränktem Maße formstabil. Speziell ist es bei Raumtemperatur nicht ohne weiteres möglich, eine reine Weichbitumenschicht zu handhaben, beispielsweise aufzurollen oder auch nur um Transportrollen umzulenken, da auch das verfestigte Weichbitumen bei Raumtemperatur immer noch extrem klebrig ist.

Bei der Erfindung kann die Handhabung der Weichbitumenschicht über die Kunststofffolie 24 erfolgen und, wie in Fig. 1 schematisch dargestellt ist, wird die Weichbitumenschicht 30 zusammen mit der Kunststofffolie 24 am stromabwärts gelegenen Ende des Obertrums 20 des Stahlbands 18 von der Rolle 16 abgenommen und zu einer Rolle 32 aufgewickelt. Wie bereits ausgeführt wurde, müssen Umlenkrollen, Greifer und dergleichen, die zum Aufwickeln und Herstellen der Rolle 32 benötigt werden, dabei nur in Berührung mit der Kunststofffolie 24 kommen.

Wenn die Rolle 32 eine gewünschte Größe erreicht hat, wird die Weichbitumenbahn 30 zusammen mit der Kunststofffolie 24 oder die Kunststofffolie 24 in einem nicht mit Bitumen bedeckten Bereich durchtrennt und ein weiterer Streifen aus der Weichbitumenschicht 30 und der Kunststofffolie 24 wird aufgewickelt. Es ist dabei nicht notwendigerweise vorgesehen, die Rolle 32 wieder abzuwickeln, um die Bitumenbahn 30 zu verarbeiten, da dies bei Weichbitumen üblicherweise nicht möglich ist, da das Weichbitumen 30 mit der Kunststofffolie 24 verklebt. Vielmehr stellt die Rolle 32 eine exakt bemessene und durch die Kunststofffolie 24 handhabbare Menge an Weichbitumen dar, die einen kompakten Block bildet. Beispielsweise wird die Rolle 32 zusammen mit der Kunststofffolie 24 aufgeschmolzen und im Straßenbau in flüssiger Form verarbeitet. Die Größe der Rolle 32 hängt von der gewünschten Masse an Weichbitumen ab, die die Rolle 32 enthalten soll. Für manuelle Handhabung liegt ein Durchmesser der Rolle 32 etwa zwischen 15 cm und 30 cm. Größere Rollen 32 werden für maschinelle Handhabung hergestellt.

Die Darstellung der Fig. 2 zeigt schematisch die Kunststofffolie 24 mit einem darauf aufgebrachten Abschnitt der Weichbitumenbahn 30. Gemäß einer Ausbildung der Erfindung werden Weichbitumenstreifen mit in Längsrichtung der Kunststofffolie 24 definierter Länge erzeugt. Die Längsrichtung der Kunststofffolie 24 ist in Fig. 2 gleich angeordnet wie in Fig. 1 und durch einen Pfeil 34 dargestellt. Auf die in Längsrichtung durchgehende Folie 24 werden somit hintereinanderliegende Streifen oder der Abschnitte der Weichbitumenbahn 30 aufgetragen, wobei in Fig. 2 lediglich ein vollständiger Streifen 30a und ein teilweise dargestellter weiterer Streifen 30b gezeigt sind. Vor dem in Längsrichtung 34 gesehen vorderen Ende des Weichbitumenstreifens 30a liegt somit ein Zwischenbereich 36, in dem die Kunststofffolie 24 nicht mit Weichbitumen bedeckt ist und zwischen dem hinteren Ende des Streifens 30a und dem vorderen Ende des Streifens 30b liegt ein weiterer Zwischenbereich 38, in dem die Kunststofffolie 24 ebenfalls nicht bedeckt ist.

Um beispielsweise das Aufwickeln des Weichbitumenstreifens 30a zu ermöglichen, wird der Zwischenbereich 36 in Richtung des gekrümmten Pfeils 40 auf die Oberseite des Weichbitumenstreifens 30a umgeschlagen. Dadurch kann das vordere Ende des Weichbitumenstreifens 30a problemlos ergriffen und dann aufgerollt werden. Im Bereich des Zwischenbereichs 38 ist ebenfalls ein gekrümmter Pfeil dargestellt. Auch dieser Zwischenbereich 38 kann auf die Oberseite des Weichbitumenstreifens 30a umgeschlagen werden, um auch das hintere Ende des Weichbitumenstreifens 30a handhaben zu können. Beim Aufwickeln des Weichbitumenstreifens 30a ist dies aber nicht unbedingt erforderlich, wie nachfolgend noch erläutert wird.

Der Zwischenbereich 38 ist mittels einer gestrichelten Linie 42 unterteilt. Diese Linie soll symbolisieren, dass die Kunststofffolie 24 in dem Zwischenbereich 38 quer zur Längsrichtung 34 durchtrennt wird. In gleicher Weise wird selbstverständlich auch der Zwischenbereich 36 der Kunststofffolie 24 quer zur Längsrichtung 34 durchtrennt.

Die Darstellung der Fig. 3 zeigt noch schematisch den Weichbitumenstreifen 30a parallel zur Längsrichtung 34. Es ist zu erkennen, dass der Weichbitumenstreifen 30a schmäler ist als die Kunststofffolie 24. Rechts und links des Weichbitumenstreifens 30a sind dadurch Bereiche mit nicht bedeckter Kunststofffolie 24 angeordnet. Diese Bereiche können entweder umgeschlagen werden, um die Handhabung des Weichbitumenstreifens 30a zu ermöglichen oder sie können, wie bereits beschrieben wurde, nach dem Herstellen der Rolle 32 miteinander verschweißt werden, um eine dichte Verpackung zu ermöglichen.

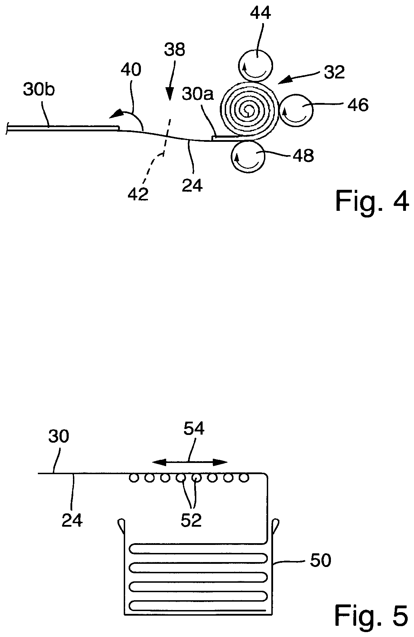

Die Darstellung der Fig. 4 zeigt schematisch das Aufrollen des Weichbitumenstreifens 30a zu einer Rolle 32. Wie bereits beschrieben wurde, wird die Kunststofffolie 24 im Zwischenbereich 38 an der gestrichelten Linie 42 quer zur Längsrichtung vollständig durchtrennt. Die Weichbitumenbahn 30a wird dann zu der Rolle 32 aufgewickelt, wobei hierzu Rollen 44, 46 und 48 dienen. Die Rollen 44, 46, 48 stehen dabei lediglich mit der Kunststofffolie 24 auf der Unterseite des Weichbitumenstreifens 30a in Berührung. Die Rollen 44, 46, 48 bleiben dadurch sauber und ein Verkleben des Weichbitumens mit den Rollen 44, 46, 48 ist nicht zu befürchten.

Nachdem die Rolle 32 ihre gewünschte Größe erreicht hat und somit der Weichbitumenstreifen 30a vollständig aufgerollt ist, wird die Kunststofffolie 24 im Bereich der Linie 42 durchtrennt. Der dadurch frei gewordene Zwischenbereich am hinteren Ende des Weichbitumenstreifens 30a kann dann auf die Außenseite der Rolle 32 und somit auf die in diesem Bereich zugängliche Kunststofffolie 24 aufgelegt werden. Die beiden Bereiche der Kunststofffolie können dann beispielsweise verschweißt oder verklebt werden, um eine dichte Verpackung der Rolle 32 bereitzustellen.

Darüber hinaus können noch die seitlich überstehenden nicht bedeckten Bereiche der Kunststofffolie 24 miteinander verschweißt werden, siehe auch Fig. 3. Dadurch kann die Rolle 32 vollständig und dicht verpackt werden.

Der nachfolgende Weichbitumenstreifen 30b wird nach dem Streifen 30a aufgerollt. Hierzu wird zunächst nach dem Durchtrennen der Kunststofffolie 24 an der Linie 42 der Teil des Zwischenbereichs 38, der an den Streifen 30b angrenzt, in Richtung des gekrümmten Pfeils 40 auf die Oberseite des Streifens 30b umgeschlagen. Das vordere Ende des Streifens 30b kann dadurch gehandhabt werden, beispielsweise mittels Greifern oder mittels der Rollen 44, 46, 48. Wie bereits beschrieben wurde, wird dann der Streifen 30b zu einer weiteren Rolle 32 aufgerollt.

Die Darstellung der Fig. 5 zeigt schematisch das Abpacken der hergestellten Weichbitumenbahn 30 mit der Kunststofffolie 24 in einen Transportsack 50. Die Weichbitumenbahn 30 wird dabei schlaufenförmig in den Transportsack 50 eingelegt. Dies wird dadurch bewirkt, dass Transportrollen 52 entlang einem Doppelpfeil 54 hin und her bewegt werden, um die Schlaufenbildung der Weichbitumenbahn 30 innerhalb des Transportsacks 50 zu ermöglichen. Die Transportrollen 50 stehen dabei lediglich mit der Kunststofffolie 24 in Verbindung, so dass das Verkleben der Weichbitumenbahn 30 mit den Transportrollen 52 nicht zu befürchten ist.

Der Transportsack 50 kann dabei aus einem Material bestehen, das einen niedrigeren Schmelzpunkt als das Weichbitumen aufweist, da die Weichbitumenbahn 30 ja bereits im verfestigen bzw. abgekühlten Zustand in den Transportsack 50 eingelegt wird. Der Transportsack 50 kann damit zusammen mit dem Weichbitumen der Weichbitumenbahn 30 und der Kunststofffolie 24 vor der Verarbeitung aufgeschmolzen werden.

## Patentansprüche

1. Verfahren zum Abpacken von Bitumen, **dadurch gekennzeichnet, dass** als Bitumen Weichbitumen mit Penetrationswerten nach DIN EN 1426 zwischen 30 Dezimillimeter und 100 Dezimillimeter sowie einem Erweichungspunkt nach der Ring und Kugel Methode von weniger als 80°C und die folgenden Schritte vorgesehen sind:
- Flächiges Auflegen einer Kunststofffolie (24) auf ein um zwei Trommeln (14, 16) umlaufendes gekühltes Band (18) eines Bandkühlers (12),
- Aufbringen von geschmolzenem Weichbitumen auf die Kunststofffolie (24) in Form mindestens einer dünnen Schicht,
- Verfestigen der Weichbitumenschicht auf dem Bandkühler (12) und
- Abnehmen der Weichbitumenschicht zusammen mit der Kunststofffolie (24) vom Bandkühler (12) in Form einer Weichbitumenbahn (30) und
- Abpacken der Weichbitumenbahn (30).

2. Verfahren nach Anspruch 1, **gekennzeichnet durch** Verwenden einer Kunststofffolie (24), die einen niedrigeren Schmelzpunkt als das Weichbitumen aufweist.

3. Verfahren nach wenigstens einem der vorstehenden Ansprüche, **gekennzeichnet durch** Verwenden einer Kunststofffolie (24) aus Polyethylen mit niedriger Dichte (LDPE).

4. Verfahren nach Anspruch 1 oder 2, **gekennzeichnet durch** Verwenden einer Kunststofffolie (24) aus Ethylenvinylacetat (EVA).

5. Verfahren nach einem der vorstehenden Ansprüche, **dadurch gekennzeichnet, dass** eine Dicke der verfertigten Weichbitumenschicht zwischen 2mm und 15mm, insbesondere 3mm bis 8mm, beträgt.

6. Verfahren nach einem der vorstehenden Ansprüche, **gekennzeichnet durch** Auflegen der Kunststofffolie (24) am stromaufwärts gelegenen Ende eines Obertrums (20) des Bands (18) und Abnehmen der Weichbitumenschicht zusammen mit der Kunststofffolie (24) am stromabwärts gelegenen Ende des Obertrums (20) des Bands (18).

7. Verfahren nach Anspruch 6, **gekennzeichnet durch** Aufbringen des geschmolzenen Weichbitumens im Bereich des stromaufwärts gelegenen Endes des Obertrums (20) des Bands (18) und Verfestigen des Weichbitumens während der Bewegung der Weichbitumenschicht vom stromaufwärts gelegenen Ende des Obertrums zum stromabwärts gelegenen Ende.

8. Verfahren nach einem der vorstehenden Ansprüche, **gekennzeichnet durch** Aufbringen des Weichbitumens in Form eines Streifens (30a, 30b), der schmäler ist als die Kunststofffolie (24), so dass neben einem rechten und linken Rand des Weichbitumenstreifens (30a, 30b) jeweils ein Streifen nicht bedeckter Kunststofffolie (24) liegt.

9. Verfahren nach einem der vorstehenden Ansprüche, **gekennzeichnet durch** Aufbringen des Weichbitumens in Form mehrerer, in Längsrichtung (34) der Kunststofffolie (24) gesehen hintereinander liegender Streifen (30a, 30b) mit jeweils definierter Länge, so dass zwischen dem Ende eines ersten Streifens (30a)und dem Beginn eines zweiten Streifens (30b) ein Zwischenbereich (36, 38) mit nicht bedeckter Kunststofffolie (24) angeordnet ist.

10. Verfahren nach Anspruch 9, **gekennzeichnet durch** Schneiden der Kunststofffolie (24) im Zwischenbereich zwischen zwei Streifen (30a, 30b) aus Weichbitumen quer zur Längsrichtung (34) der Kunststofffolie (24).

11. Verfahren nach Anspruch 10, **gekennzeichnet durch** Umschlagen eines in Längsrichtung (34) vorne liegenden Teils des Zwischenbereichs (36, 38) der Kunststofffolie (24) auf die Oberseite des Weichbitumenstreifens (30a, 30b).

12. Verfahren nach wenigstens einem der vorstehenden Ansprüche, **gekennzeichnet durch** Aufwickeln des Streifens (30a, 30b) aus Weichbitumen zusammen mit der Kunststofffolie (24).

13. Verfahren nach Anspruch 12, **gekennzeichnet durch** Verschweißen oder Verkleben eines Teils des Zwischenbereichs (36, 38) mit einem nach dem Aufwickeln zugänglichen Abschnitt der Unterseite der Kunststofffolie (24).

14. Verfahren nach einem der vorstehenden Ansprüche, **gekennzeichnet durch** Verschweißen oder Verkleben der über den rechten Rand des Weichbitumenstreifens (30a, 30b) herausragenden Streifen nicht bedeckter Kunststofffolie (24) miteinander und der über den linken Rand des Weichbitumenstreifens herausragenden Streifen nicht bedeckter Kunststofffolie (24) miteinander.

15. Verfahren nach wenigstens einem der vorstehenden Ansprüche, **gekennzeichnet durch** schlaufenförmiges Einlegen der Weichbitumenbahn (30) mit der Kunststofffolie (24) in einen Transportsack (50).

16. Verfahren nach Anspruch 15, **gekennzeichnet durch** Verwenden eines Transportsacks (50), der einen niedrigeren Schmelzpunkt als das Weichbitumen aufweist.

17. Verfahren nach wenigstens einem der vorstehenden Ansprüche, **gekennzeichnet durch** Aufrollen der Weichbitumenbahn (30) und Bilden einer äußeren Verpackung mittels der Kunststofffolie (24).

## Claims

1. Method for packaging bitumen, **characterized in that** the bitumen is soft bitumen with penetration values according to DIN EN 1426 of between 30 decimillimeters and 100 decimillimeters and a softening point according to the ring-and-ball method of less than 80°C, and the following steps are provided:
- placing a plastic film (24) flat onto a cooled belt (18) of a belt cooler (12) that runs around two drums (14, 16),
- applying molten soft bitumen in the form of at least one thin layer to the plastic film (24),
- solidifying the soft bitumen layer on the belt cooler (12) and
- removing the soft bitumen layer together with the plastic film (24) from the belt cooler (12) in the form of a soft bitumen sheeting (30) and
- packaging the soft bitumen sheeting (30).

2. Method according to claim 1, **characterized by** using a plastic film (24) that has a lower melting point than the soft bitumen.

3. Method according to at least one of the preceding claims, **characterized by** using a plastic film (24) of low-density polyethylene (LDPE).

4. Method according to claim 1 or 2, **characterized by** using a plastic film (24) of ethylene-vinyl acetate (EVA).

5. Method according to any one of the preceding claims, **characterized in that** a thickness of the solidified soft bitumen layer is between 2 mm and 15 mm, in particular between 3 mm and 8 mm.

6. Method according to any one of the preceding claims, **characterized by** placement of the plastic film (24) at the upstream end of an upper strand (20) of the belt (18) and removal of the soft bitumen layer together with the plastic film (24) at the downstream end of the upper strand (20) of the belt (18).

7. Method according to claim 6, **characterized by** application of the molten soft bitumen in the region of the upstream end of the upper strand (20) of the belt (18) and solidification of the soft bitumen during the movement of the soft bitumen layer from the upstream end of the upper strand to the downstream end.

8. Method according to any one of the preceding claims, **characterized by** application of the soft bitumen in the form of a strip (30a, 30b) that is narrower than the plastic film (24), so that alongside a right-hand and left-hand border of the soft bitumen strip (30a, 30b) there respectively lies a strip of not-covered plastic film (24).

9. Method according to any one of the preceding claims, **characterized by** application of the soft bitumen in the form of a number of strips (30a, 30b) of a respectively defined length lying one behind the other as seen in the longitudinal direction (34) of the plastic film (24), so that between the end of a first strip (30a) and the beginning of a second strip (30b) there is arranged an intermediate region (36, 38) with not-covered plastic film (24).

10. Method according to claim 9, **characterized by** cutting the plastic film (24) in the intermediate region between two strips (30a, 30b) of soft bitumen transversely to the longitudinal direction (34) of the plastic film (24).

11. Method according to claim 10, **characterized by** folding over a part of the intermediate region (36, 38) of the plastic film (24) that is lying at the front in the longitudinal direction (34) onto the upper side of the soft bitumen strip (30a, 30b).

12. Method according to at least one of the preceding claims, **characterized by** winding up the strip (30a, 30b) of soft bitumen together with the plastic film (24).

13. Method according to claim 12, **characterized by** welding or adhesively bonding part of the intermediate region (36, 38) to a portion of the underside of the plastic film (24) that is accessible after the winding up.

14. Method according to any one of the preceding claims, **characterized by** welding or adhesively bonding the strips of not-covered plastic film (24) protruding beyond the right-hand border of the soft bitumen strip (30a, 30b) to one another and the strips of not-covered plastic film (24) protruding beyond the left-hand border of the soft bitumen strip to one another.

15. Method according to at least one of the preceding claims, **characterized by** looped placement of the soft bitumen sheeting (30) with the plastic film (24) into a transporting bag (50).

16. Method according to claim 15, **characterized by** using a transporting bag (50) that has a lower melting point than the soft bitumen.

17. Method according to at least one of the preceding claims, **characterized by** rolling up the soft bitumen sheeting (30) and forming an outer package by means of the plastic film (24).

## Revendications

1. Procédé de conditionnement de bitume, **caractérisé en ce qu'**un bitume mou ayant des valeurs de pénétration selon DIN EN 1426 comprises entre 30 décimillimètres et 100 décimillimètres, ainsi qu'un point de ramollissement selon la méthode à anneau et bille de moins de 80 °C, est utilisé en tant que bitume, et les étapes suivantes sont prévues :
- la pose à plat d'une feuille en matière plastique (24) sur une bande refroidie (18) d'un refroidisseur à bande (12) circulant autour de deux tambours (14, 16),
- l'application de bitume mou fondu sur la feuille en matière plastique (24) sous la forme d'au moins une couche mince,
- la solidification de la couche en bitume mou sur le refroidisseur à bande (12), et
- le décollement de la couche de bitume mou conjointement avec la feuille en matière plastique (24) du refroidisseur à bande (12) sous la forme d'une bande de bitume mou (30), et
- le conditionnement de la bande de bitume mou (30).

2. Procédé selon la revendication 1, **caractérisé par** l'utilisation d'une feuille en matière plastique (24) qui présente un point de fusion plus faible que le bitume mou.

3. Procédé selon au moins l'une quelconque des revendications précédentes, **caractérisé par** l'utilisation d'une feuille en matière plastique (24) en polyéthylène basse densité (LDPE).

4. Procédé selon la revendication 1 ou 2, **caractérisé par** l'utilisation d'une feuille en matière plastique (24) en éthylène-acétate de vinyle (EVA).

5. Procédé selon l'une quelconque des revendications précédentes, **caractérisé en ce qu'**une épaisseur de la couche de bitume mou fabriquée est comprise entre 2 mm et 15 mm, notamment de 3 mm à 8 mm.

6. Procédé selon l'une quelconque des revendications précédentes, **caractérisé par** la pose de la feuille en matière plastique (24) à l'extrémité située en amont d'une partie supérieure (20) de la bande (18) et le décollement de la couche de bitume mou conjointement avec la feuille en matière plastique (24) à l'extrémité située en aval de la partie supérieure (20) de la bande (18).

7. Procédé selon la revendication 6, **caractérisé par** l'application du bitume mou fondu dans la zone de l'extrémité située en amont de la partie supérieure (20) de la bande (18) et la solidification du bitume mou pendant le déplacement de la couche de bitume mou depuis l'extrémité située en amont de la partie supérieure vers l'extrémité située en aval.

8. Procédé selon l'une quelconque des revendications précédentes, **caractérisé par** l'application du bitume mou sous la forme d'une bande (30a, 30b) qui est plus étroite que la feuille en matière plastique (24), de telle sorte qu'une bande de feuille en matière plastique non recouverte (24) se trouve à chaque fois à côté d'un bord droit et d'un bord gauche de la bande de bitume mou (30a, 30b).

9. Procédé selon l'une quelconque des revendications précédentes, **caractérisé par** l'application du bitume mou sous la forme de plusieurs bandes (30a, 30b) disposées les unes après les autres dans la direction longitudinale (34) de la feuille en matière plastique (24), ayant chacune une longueur définie, de telle sorte qu'une zone intermédiaire (36, 38) de feuille en matière plastique non recouverte (24) soit agencée entre la fin d'une première bande (30a) et le début d'une deuxième bande (30b).

10. Procédé selon la revendication 9, **caractérisé par** la découpe de la feuille en matière plastique (24) dans la zone intermédiaire entre deux bandes (30a, 30b) en bitume mou perpendiculairement à la direction longitudinale (34) de la feuille en matière plastique (24).

11. Procédé selon la revendication 10, **caractérisé par** le rabat d'une partie de la zone intermédiaire (36, 38) de la feuille en matière plastique (24) située à l'avant dans la direction longitudinale (34) sur le côté supérieur de la bande de bitume mou (30a, 30b).

12. Procédé selon au moins l'une quelconque des revendications précédentes, **caractérisé par** l'enroulement de la bande (30a, 30b) en bitume mou conjointement avec la feuille en matière plastique (24).

13. Procédé selon la revendication 12, **caractérisé par** le soudage ou le collage d'une partie de la zone intermédiaire (36, 38) avec une section du côté inférieur de la feuille en matière plastique (24) accessible après l'enroulement.

14. Procédé selon l'une quelconque des revendications précédentes, **caractérisé par** le soudage ou le collage des bandes de feuille en matière plastique non recouverte (24) dépassant au-dessus du bord droit de la bande de bitume mou (30a, 30b) les unes avec les autres, et des bandes de feuille en matière plastique non recouverte (24) dépassant au-dessus du bord gauche de la bande de bitume mou les unes avec les autres.

15. Procédé selon au moins l'une quelconque des revendications précédentes, **caractérisé par** l'insertion en forme de boucle de la bande de bitume mou (30) avec la feuille en matière plastique (24) dans un sac de transport (50).

16. Procédé selon la revendication 15, **caractérisé par** l'utilisation d'un sac de transport (50) qui présente un point de fusion plus faible que le bitume mou.

17. Procédé selon au moins l'une quelconque des revendications précédentes, **caractérisé par** l'enroulement de la bande de bitume mou (30) et la formation d'un emballage extérieur au moyen de la feuille en matière plastique (24).
